(19) Europäisches Patentamt
European Patent Office
Office européen des brevets

(11) Veröffentlichungsnummer: **0 114 149**
**B1**

(12) # EUROPÄISCHE PATENTSCHRIFT

(45) Veröffentlichungstag der Patentschrift: **08.06.88**

(51) Int. Cl.⁴: **C 08 G 14/06**

(21) Anmeldenummer: **84810010.3**

(22) Anmeldetag: **09.01.84**

(54) **Aminogruppenhaltige Phenol-Novolake und Verfahren zu deren Herstellung.**

(30) Priorität: **13.01.83 CH 173/83**

(43) Veröffentlichungstag der Anmeldung:
**25.07.84 Patentblatt 84/30**

(45) Bekanntmachung des Hinweises auf die Patenterteilung:
**08.06.88 Patentblatt 88/23**

(84) Benannte Vertragsstaaten:
**CH DE FR GB IT LI NL SE**

(56) Entgegenhaltungen:
**DE-A-2 651 172**
**DE-C-883 651**
**GB-A-1 032 884**

(73) Patentinhaber: **CIBA- GEIGY AG, Klybeckstrasse 141, CH- 4002 Basel (CH)**

(72) Erfinder: **Stockinger, Friedrich, Stutzrain 4, CH- 4434 Hölstein (CH)**
Erfinder: **Haug, Theobald, Dr., Untere Flühackerstrasse 12, CH- 4402 Frenkendorf (CH)**

**EP 0 114 149 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die vorliegende Erfindung betrifft neue, in saurem Medium hergestellte Kondensationsprodukte aus substituiertem Phenol, disubstituiertem Anilin und Aldehyden oder Ketonen und Verfahren zu ihrer Herstellung.

Novolake können bekanntlich auch als Härtungsmittel für Epoxidharze verwendet werden. Es ist ferner bekannt, dass man die Eigenschaften von gehärteten Epoxidharzen verbessern kann, indem man als Härtungsmittel mit aromatischen Aminen, vorzugsweise Anilin, modifizierte Phenol-Formaldehyd-Kondensationsprodukte einsetzt.

Die in den US-Patenten 3 714 121 und 4 278 733 beschriebenen, mit Anilin modifizierten Kondensationsprodukte aus Phenol und Formaldehyd werden in neutralem oder basischem Medium hergestellt und stellen somit Resole dar.

In der DE-OS-2 217 099 werden als Epoxidharzhärtungsmittel bestimmte mit Anilin modifizierte Kondensationsprodukte offenbart, die erhalten werden, indem man Anilin und Phenol gleichzeitig mit Formaldehyd im Molverhältnis von annähernd 1 : 1 : 2 kondensiert, wobei die Kondensation in Gegenwart von alkalischen oder sauren Katalysatoren durchgeführt wird. Die mit solchen Kondensationsprodukten gehärteten Epoxidharze weisen nur geringe Wärmeformbeständigkeiten auf.

Es wurde nun gefunden, dass in saurem Medium hergestellte Kondensationsprodukte aus substituiertem Phenol-Novolak, disubstituiertem Anilin und Aldehyden oder Ketonen wertvollere Härtungsmittel für Epoxidharze darstellen, da sie mit Epoxidharzen besser verarbeitbar sind und den gehärteten Epoxidharzen eine bessere Chemikalienbeständigkeit verleihen.

Gegenstand vorliegender Erfindung sind somit neue aminogruppenhaltige Phenol-Novolake der Formel I und II

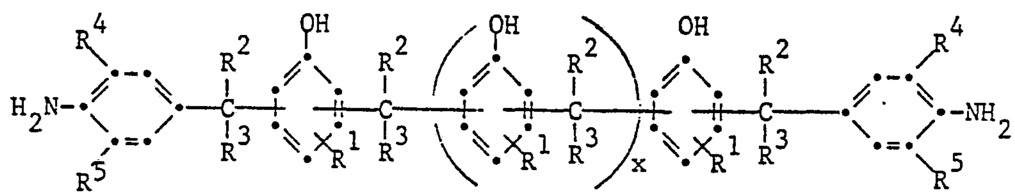

(I)

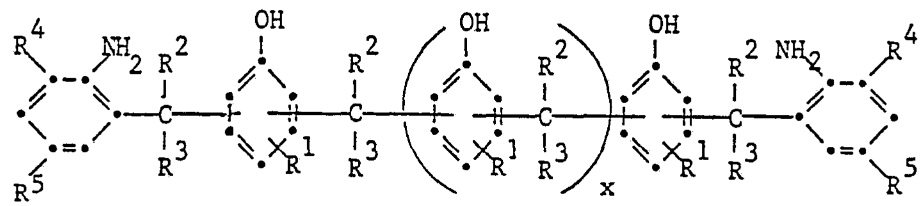

(II),

worin

$R^1$ in o- oder p-Stellung zur phenolischen OH-Gruppe gebunden ist und ein Halogenatom, Nitrogruppe, lineares oder verzweigtes Alkyl mit bis zu 6 C-Atomen, Alkenyl mit bis zu 6 C-Atomen, Alkoxy mit bis zu 6 C-Atomen oder Phenyl bedeutet,

$R^2$ ein Wasserstoffatom, lineares oder verzweigtes Alkyl mit bis zu 8 C-Atomen, Cycloalkyl mit 5 oder 6 C-Atomen, Phenyl oder Furfuryl bedeutet,

$R^3$ ein Wasserstoffatom, Phenyl oder lineares oder verzweigtes Alkyl mit bis zu 8 C-Atomen bedeutet,

$R^4$ und $R^5$ unabhängig voneinander je ein lineares oder verzweigtes, unsubstituiertes oder durch Halogenatome Nitro- Cyanogruppen, Alkoxy mit bis zu 4 C-Atomen substituiertes Alkyl mit bis zu 6 C-Atomen im Alkylrest, Halogenatom, eine Nitro- oder Cyanogruppe bedeuten, und

x für null oder eine durchschnittliche Zahl bis 18 steht.

Vorzugsweise bedeuten in Formel I oder II $R^1$ je ein Alkyl mit bis zu 4 C-atomen, insbesondere Methyl; $R^2$ je ein Wasserstoffatom; $R^3$ je ein Wasserstoffatom, Phenyl oder Alkyl mit 1 bis 4 C-Atomen, insbesondere Methyl oder Äthyl; $R^4$ und $R^5$ unabhängig voneinander je ein lineares oder verzweigtes Alkyl bis zu 4 C-Atomen und x eine durchschnittliche Zahl von 1 bis 8.

Die Verbindungen der Formel I oder II können hergestellt werden, indem man in wässrigem saurem Medium mit einem pH-Wert von 0,5 bis 3 1 Mol eines mehrkernigen Phenols der Formel III

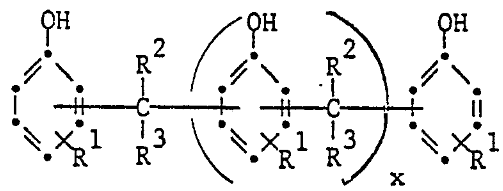 (III),

worin $R^1$, $R^2$, $R^3$ und x die gleiche Bedeutung wie in Formel I oder II haben, mit 2 Mol eines Aldehyds oder Ketons der Formel IV

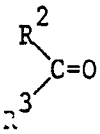 (IV),

worin $R^2$ und $R^3$ die gleiche Bedeutung wie in Formel I oder II haben, und mit 2 Mol eines substituierten Anilins der Formel V oder VI

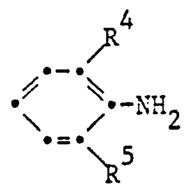 (V) oder 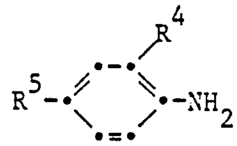 (VI),

worin $R^4$ und $R^5$ die gleiche Bedeutung wie in Formel I haben, umsetzt.

Vorzugsweise geht man bei der Herstellung der erfindungsgemässen Verbindung der Formel I und II von solchen mehrkernigen Phenolen der Formel III aus, worin

$R^1$ je ein Alkyl mit bis zu 4 C-Atomen,
$R^2$ je ein Wasserstoffatom
$R^3$ je ein Wasserstoffatom, Phenyl oder Alkyl mit 1 bis 4 C-Atomen, insbesondere Methyl oder Äthyl, und
x eine durchschnittliche Zahl von 1 bis 8 bedeuten.

Bei der Durchführung dieses Verfahrens geht man vorteilhafterweise so vor, dass man das Phenol der Formel III mit dem Anilin der Formel V oder VI vorlegt, die Reaktionslösung mit einer aliphatischen Carbonsäure oder Mineralsäure auf einen pH-Wert von 0,5 bis 3 einstellt und unter Rühren und Erhitzen der vorgelegten Ausgangssubstanzen den Aldehyd oder das Keton, vorzugsweise in einem geringen molaren Überschuss, zutropfen lässt.

Zur Herstellung des sauren Reaktionsmediums verwendet man vorzugsweise Ameisen-, Essig-, Oxal-, Salz- oder Schwefelsäure. Das Verfahren wird ferner im allgemeinen bei Reaktionstemperaturen von 60 bis 120°C, vorzugsweise zwischen 80 und 100°C, durchgeführt.

Die Aufarbeitung des Reaktionsgemisches erfolgt nach Neutralisierung des Reaktionsgemisches mit einer 30-50 %-igen Alkalihydroxidlösung durch nachfolgendes Auswaschen der wasserlöslichen Anteile mit heissem Wasser.

Eine zusätzliche Reinigung kann man dadurch erreichen, dass man das Reaktionsprodukt in einem wasserlöslichen organischen Lösungsmittel löst und die Lösung unter kräftigem Rühren in Wasser einträgt und das Produkt auf diese Weise ausfällt. Nach dem Filtrieren wird der Rückstand im Vakuum bei 20 bis 50°C getrocknet.

Die Ausgangsstoffe der Formeln III bis VI stellen bekannte Verbindungen dar und sind zum Teil im Handel erhältlich.

Die mehrkernigen, substituierten Phenole der Formel III, wie beispielsweise 2,2-Bis-(3-methyl-4-hydroxyphenyl)-propan, 2,2-Bis-(3-chlormethyl-4-hydroxyphenyl)-propan, Bis-(3-tert.-butyl-4-hydroxyphenyl)-methan, Bis-(3-allyl-4-hydroxyphenyl)-methan oder die im Handel erhältlichen Kresol-Novolake, können in bekannter Weise hergestellt werden, indem man ein mit $R^1$ substituiertes einkerniges Phenol mit den Aldehyden oder Ketonen der Formel IV zu den Bisphenolen oder den Novolaken umsetzt.

Geeignete Verbindungen der Formel IV sind beispielsweise Formaldehyd, Acetaldehyd, Propionaldehyd, Benzaldehyd, Furfural oder Aceton, Diäthylketon, Acetophenon oder Benzophenon.

Als disubstituierte Aniline der Formeln V und VI stellen beispielsweise 2,6-Diäthylanilin, 2-Isopropyl-6-methylanilin, 2,4-Dimethylanilin, 2-Methyl-4-nitranilin, 2-Chlor-4-nitranilin, 2-Cyan-4-nitranilin, 2,6-Dichloranilin, 2,4-Dinitranilin, 4-Chlor-2-methylanilin, 2-Brom-4-nitranilin und 2-Trifluormethyl-4-chloranilin geeignete Verbindungen dar.

Wie eingangs erwähnt stellen die erfindungsgemässen aminogruppenhaltigen Phenol-Novolake der Formeln I und II wertvolle Epoxidharzhärtungsmittel dar und sie können zur Härtung von allen Typen der Epoxidharze, wie Glycidylgruppen enthaltenden Verbindungen oder cycloaliphatischen Epoxidverbindungen mit einer im

cycloaliphatischen Ring gebundenen Epoxidgruppe, eingesetzt werden.

Die erfindungsgemässen Phenol-Novolake der Formeln I und II sind auch geeignete Ausgangsstoffe zur Herstellung von Epoxidharze, die durch Glycidylierung der erfindungsgemässen Verbindungen erhalten werden.

**Beispiel 1:**

In einem 4,5 Liter Sulfierkolben, ausgerüstet mit einem Ankerrührer aus Edelstahl, Thermometer, Rückflusskühler und einem Tropftrichter, werden 149,2 g (1,0 Mol) 2,6-Diäthylanilin, 368,4 g eines technisch hergestellten o-Kresol-Formaldehyd-Novolaks (mittleres Molekulargewicht $\bar{M}n$ = 714; OH-Äquivalentgewicht = 122,8) und 107,9 g (0,55 Mol) 50 %-ige, wässrige Schwefelsäure vorgelegt und unter Rühren und Heizen 101,5 g (1,25 Mol) 37 %-iger, wässriger Formaldehyd innerhalb von 11 Minuten bei einer Temperatur von 82-90°C zugetropft. Man lässt das Reaktionsgemisch bei Siedetemperatur 4 Stunden und 24 Minuten lang reagieren, neutralisiert anschliessend mit 123,4 g (1,10 Mol) 50 %-igem, wässrigem Kaliumhydroxid, dekantiert die wässrige Phase ab, versetzt mit 1 Liter siedendem Wasser, rührt das Reaktionsgemisch 10 Minuten lang, dekantiert ab und wiederholt den Vorgang 6 mal. Nach dem Auswaschen der wasserlöslichen Anteile wird das Reaktionsgemisch in 1,5 Liter Aceton gelöst, die Lösung filtriert und das Filtrat in 24 Liter Eiswasser eingetragen, das mit einem Turborührer kräftig durchmischt wird. Das gefällte Produkt wird abfiltriert, mit Wasser gewaschen und anschliessend bei 50°C im Vakuum getrocknet.

Man erhält 518,6 g eines beigen, pulverförmigen Novolaks, dessen Stickstoffgehalt 2,36 % beträgt. Der Erweichungspunkt nach Kofler liegt bei 100°C. Das erhaltene Produkt entspricht folgender Strukturformel:

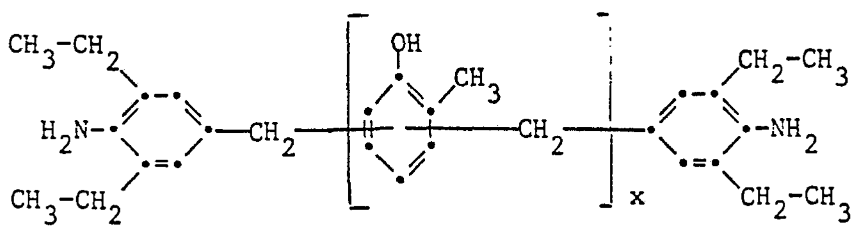

x ~ 6

**Beispiel 2:**

Gemäss Beispiel 1 werden 59,7 g (0,4 Mol) 2,6-Diäthylanilin, 147,4 g eines technisch hergestellten o-Kresol-Formaldehyd-Novolaks (mittleres Molekulargewicht $\bar{M}n$ = 714; OH-Äquivalentgewicht = 122,8), 19,8 g (0,22 Mol) Oxalsäure und 40,6 g (0,50 Mol) 37 %-iger wässriger Formaldehyd zur Reaktion gebracht, mit 49,4 g (0,44 Mol) 50 %-iger, wässriger Kaliumhydroxidlösung neutralisiert und anschliessend analog Beispiel 1 aufgearbeitet.

Es werden 204,9 g eines bräunlichen Novolaks erhalten, welcher 2,52 % Stickstoff enthält und dessen Erweichungspunkt nach Kofler 94°C beträgt. Das erhaltene Produkt entspricht folgender Strukturformel:

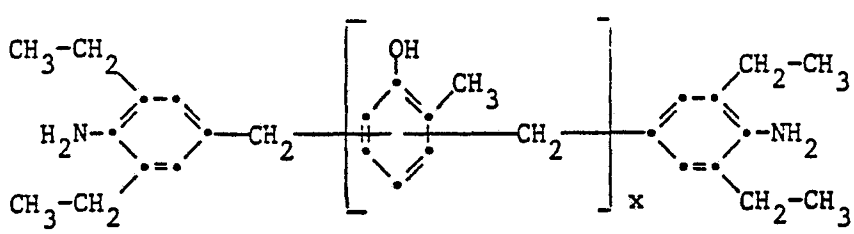

x ~ 6

**Anwendungsbeispiel**

162 g 1,1,2,2-Tetra-(p-glycidyloxyphenyl)-äthan, 275 g Tetrabrombisphenol-A-diglycidyläther (durchschnittlicher Epoxidgehalt 2,75 Val/kg), 143 g eines mit Tetrabrombisphenol A nach dem Advancementverfahren vorverlängerten Bisphenol A-diglycidyläthers (Bromgehalt durchschnittlich 21 Gewichtsprozent, Epoxidgehalt 2,1 Val/kg) und 272 g Novolak gemäss Beispiel 1 werden zusammen in 500 g Methyläthylketon gelöst. Um kürzere Verarbeitungszeiten zu erzielen, empfiehlt sich die Zugabe von 3,0 g Phenylimidazol. Mit dieser Lösung wird Glasgewebe imprägniert, welches danach bei 140°C getrocknet wird. Es entsteht ein sogenanntes Prepreg. Je 8 Lagen dieses Prepregs werden während 2 Stunden bei 170°C und einem Druck von $29{,}4 \cdot 10^4$ Pa verpresst, wodurch eine Laminatplatte entsteht. Nach 2-minütiger Exposition von Laminatproben (5x5 cm) in den Dampf von siedendem Trichloräthylen beträgt ihre Gewichtsaufnahme nur 0,05 %.

Ohne die Verwendung von 2-Phenylimidazol wird die gleiche Gewichtsveränderung festgestellt. Trichloräthylen ist ein in der Leiterplattenindustrie häufig gebrauchtes Lösungsmittel. Es ist daher wichtig, dass eine möglichst geringe Menge davon absorbiert wird.

**Patentansprüche**

1. Aminogruppenhaltige Phenol-Novolake der Formeln I und II

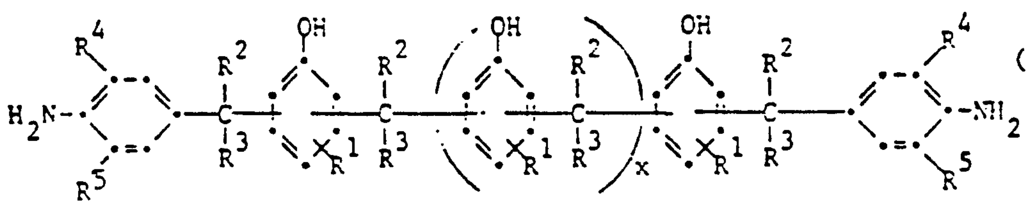
(I)

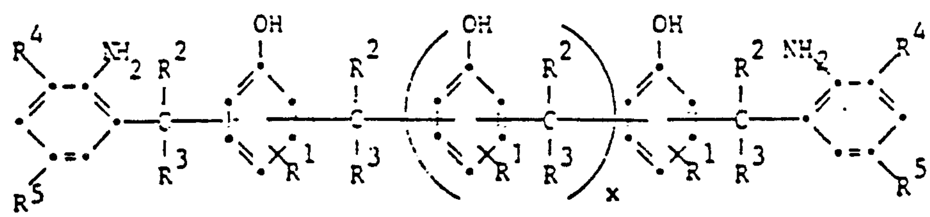
(II)

worin

$R^1$ in o-oder p-Stellung zur phenolischen OH-Gruppe gebunden ist und ein Halogenatom, Nitrogruppe, lineares oder verzweigtes Alkyl mit bis zu 6 C-Atomen, Alkenyl mit bis zu 6 C-Atomen, Alkoxy mit bis zu 6 C-Atomen oder Phenyl bedeutet,

$R^2$ ein Wasserstoffatom, lineares oder verzweigtes Alkyl mit bis zu 8 C-Atomen, Cycloalkyl mit 5 oder 6 C-Atomen, Phenyl oder Furfuryl bedeutet,

$R^3$ ein Wasserstoffatom, Phenyl oder lineares oder verzweigtes Alkyl mit bis zu 8 C-Atomen bedeutet,

$R^4$ und $R^5$ unabhängig voneinander je ein lineares oder verzweigtes, unsubstituiertes oder durch Halogenatome, Nitro-, Cyanogruppen, Alkoxy mit bis zu 4 C-atomen substituiertes Alkyl mit bis zu 6 C-Atomen im Alkylrest, Halogenatom, eine Nitro- oder Cyanogruppe bedeuten, und

x für null oder eine durchschnittliche Zahl bis 18 steht.

2. Phenol-Novolake gemäss Anspruch 1 der Formel I oder II, worin

$R^1$ je ein Alkyl mit bis zu 4 C-Atomen,

$R^2$ je ein Wasserstoffatom,

$R^3$ je ein Wasserstoffatom, Phenyl oder Alkyl mit 1 bis 4 C-Atomen,

$R^4$ und $R^5$ unabhängig voneinander je ein lineares oder verzweigtes Alkyl mit bis zu 4 C-Atomen und

x eine durchschnittliche Zahl von 1 bis 8 bedeuten.

3. Verfahren zur Herstellung von aminogruppenhaltigen Phenol-Novolaken der Formeln I und II gemäss Anspruch 1 dadurch gekennzeichnet, dass man in wässrigem saurem Medium mit einem pH-Wert von 0,5 bis 3 1 Mol eines mehrkernigen Phenols der Formel III

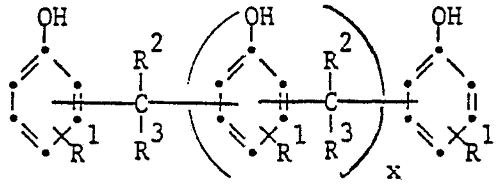

(III),

worin $R^1$, $R^2$, $R^3$ und x die gleiche Bedeutung wie in Formel I oder II haben, mit 2 Mol eines Aldehyds oder Ketons der Formel IV

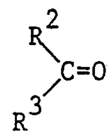

(IV),

worin $R^2$ und $R^3$ die gleiche Bedeutung wie in Formel I oder II haben, und mit 2 Mol eines substituierten Anilins der Formel V oder VI

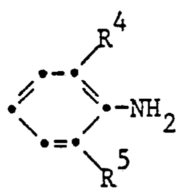

(V) oder

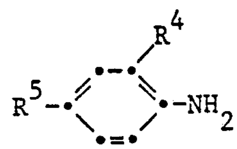

(VI),

worin $R^4$ und $R^5$ die gleiche Bedeutung wie in Formel I haben, umgesetzt.

## Claims

1. Phenol-novolaks containing amino groups, of the formulae I and II

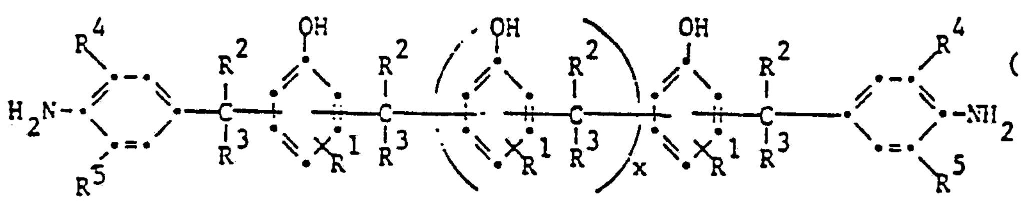

(I)

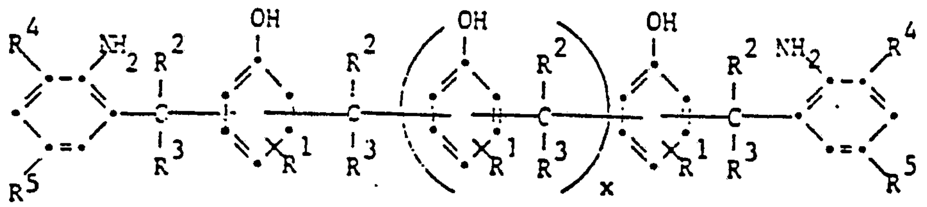

(II)

in which $R^1$ is bonded in the o- or p-position relative to the phenolic OH group and is a halogen atom, a nitro group, linear or branched alkyl having not more than 6 C atoms, alkenyl having not more than 6 C atoms, alkoxy having not more than 6 C atoms or phenyl, $R^2$ is a hydrogen atom, linear or branched alkyl having not more than 8 C atoms, cycloalkyl having 5 or 6 C atoms, phenyl or furfuryl, $R^3$ is a hydrogen atom, phenyl or linear or branched alkyl having not more than 8 C atoms, $R^4$ and $R^5$ independently of one another are each linear or branched alkyl which has not more than 6 C atoms in the alkyl radical and is unsubstituted or substituted by

halogen atoms, nitro or cyano groups or alkoxy having not more than 4 C atoms, or a halogen atom or a nitro or cyano group and x is zero or an average number of not more than 18.

2. Phenol-novolaks according to claim 1 of the formula I or II in which the radicals $R^1$ are each alkyl having not more than 4 C atoms, the radicals $R^2$ are each a hydrogen atom, the radicals $R^3$ are each a hydrogen atom, phenyl or alkyl having 1 to 4 C atoms, $R^4$ and $R^5$ independently of one another are each linear or branched alkyl having not more than 4 C atoms and x has an average value of 1 to 8.

3. Process for the preparation of phenol-novolaks containing amino groups, of the formulae I and II, according to claim 1, wherein 1 mol of a polynuclear phenol of the formula III

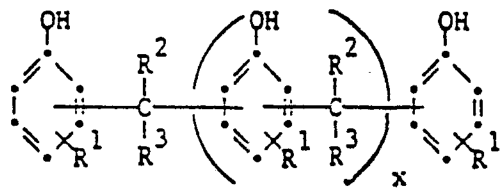 (III),

in which $R^1$, $R^2$, $R^3$ and x have the same meaning as in formula I or II, is reacted with 2 mol of an aldehyde or ketone of the formula IV

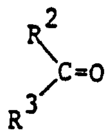 (IV),

in which $R^2$ and $R^3$ have the same meaning as in formula I or II, and 2 mol of a substituted aniline of the formual V or VI

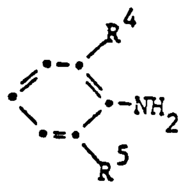 (V) or 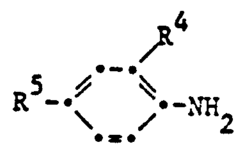 (VI),

in which $R^4$ and $R^5$ have the same meaning as in formula I in an aqueous acid medium having a pH value of 0.5 to 3.

**Revendications**

1. Novolaques phénoliques aminées qui répondent à l'une des formules I et II:

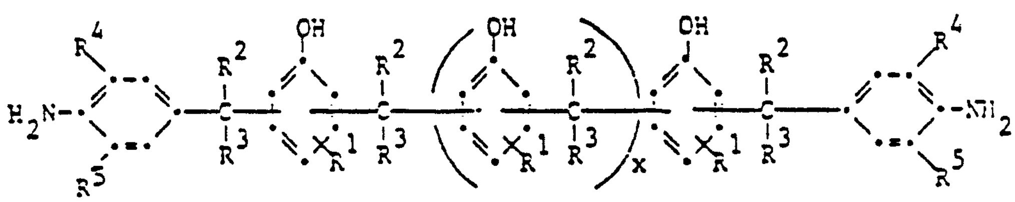 (I)

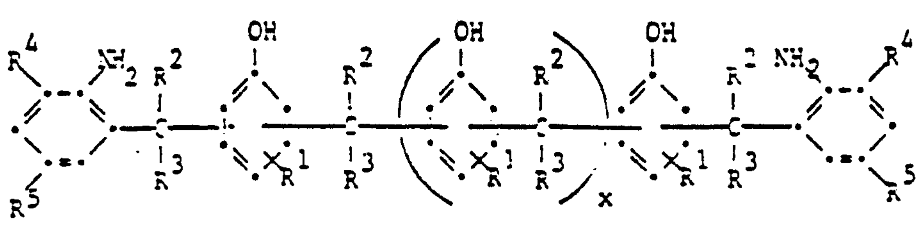 (II)

dans lesquelles:

$R^1$ se trouve en position ortho ou para relativement au radical hydroxy phénolique et représente un atome d'halogène, un radical nitro, un alkyle linéaire ou ramifié qui contient au plus 6 atomes de carbone, un alcényle

à au plus 6 atomes de carbone, un alcoxy à au plus 6 atomes de carbone ou un phényle,

$R^2$ représente un atome d'hydrogène, un alkyle linéaire ou ramifié qui contient au plus 8 atomes de carbone, un cycloalkyle à 5 ou 6 atomes de carbone, un phényle ou un furfuryle,

$R^3$ représente un atome d'hydrogène, un phényle ou un alkyle linéaire ou ramifié qui contient au plus 8 atomes de carbone,

$R^4$ et $R^5$ représentent chacun, indépendamment l'un de l'autre, un alkyle à au plus 6 atomes de carbone, linéaire ou ramifié, non substitué ou porteur d'un atome d'halogène, d'un nitro, d'un cyano ou d'un alcoxy à au plus 4 atomes de carbone, un atome d'halogène un radical nitro ou un radical cyano, et

x est égal à 0 ou a une valeur moyenne au plus égale à 18.

2. Novolaques phénoliques de formule I ou II selon la revendication 1, dans lesquelles:

les $R^1$ représentent chacun un alkyle contenant au plus 4 atomes de carbone,

les $R^2$ représentent chacun un atome d'hydrogène,

les $R^3$ représentent chacun un atome d'hydrogène, un phényle ou un alkyle contenant de 1 à 4 atomes de carbone,

$R^4$ et $R^5$ représentent chacun, indépendamment l'un de l'autre, un radical alkyle, linéaire ou ramifié, qui contient au plus 4 atomes de carbone et

x a une valeur moyenne de 1 à 8.

3. Procédé pour préparer des novolaques phénoliques aminées de formule I ou II selon la revendication 1, procédé caractérisé en ce qu'on fait réagir, en milieu aqueux acide, à un pH de 0,5 à 3, 1 mol d'un phénol à plusieurs noyaux qui répond à la formule III:

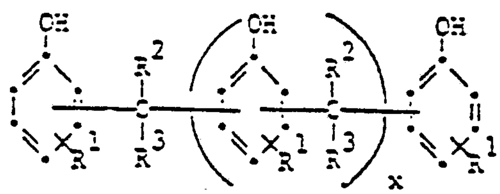

(III)

dans laquelle $R^1$, $R^2$, $R^3$ et x ont les mêmes significations que dans les formules I et II, avec 2 mol d'un aldéhyde ou d'une cétone répondant à la formule IV:

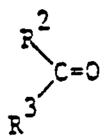

(IV)

dans laquelle $R^2$ et $R^3$ ont les mêmes significations que dans les formules I et II, et avec 2 mol d'une aniline substituée répondant à l'une des formules V et VI:

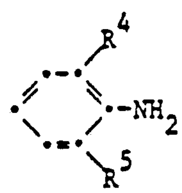

(V)

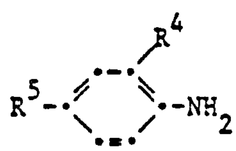

(VI)

dans lesquelles $R^4$ et $R^5$ ont les mêmes significations que dans la formule I.